# EUROPEAN PATENT APPLICATION

(11) **EP 2 816 553 A1**
(43) Date of publication of application: **24.12.2014**
(21) Application number: 13173119.2
(22) Date of filing: 20.06.2013
(51) Int. Cl.: G10L 15/18, G10L 15/22, G10L 15/08

(54) **Natural language understanding automatic speech recognition post processing**

(71) Applicant: 2236008 Ontario Inc., Waterloo, ON N2K 0A7 (CA)
(72) Inventor: Fry, Darrin Kenneth John, Kanata, Ontario K2K 0B3 (CA)
(74) Representative: Roberts, Gwilym Vaughan

(57) **Abstract**

In an automatic speech recognition post processing system, speech recognition results are received from an automatic speech recognition service. The speech recognition results may include transcribed speech, an intent classification and/or extracted fields of intent parameters. The speech recognition results are post processed for use in a specified context. All or a portion of the speech recognition results are compared to keywords that are sensitive to the specified context. The post processed speech recognition results are provided to an appropriate application which is operable to utilize the context sensitive product of post processing.

## Description

### CROSS REFERENCES TO RELATED APPLICATIONS

This application makes reference to:
United States Patent Application Serial No. 13/460,443, titled "Multipass ASR Controlling Multiple Applications," filed April 30, 2012;
United States Patent Application Serial No. 13/460,462, titled "Post Processing of Natural Language ASR," filed on April 30, 2012; and
United States Patent Application Serial No. 13/679,654, titled "Application Services Interface to ASR," filed November 16, 2012.

Each of the above identified patent applications is hereby incorporated herein by reference in its entirety.

### BACKGROUND OF THE INVENTION

### 1. Technical Field

This disclosure relates to voice recognition and more particularly to enhancing automatic speech recognition results.

### 2. Related Art

Automatic Speech Recognition (ASR) allows devices to analyze spoken language to determine what has been said. It determines what words, phrases, or sentences are spoken by processing and analyzing speech to produce a recognition result.

Many electronic devices host voice enabled applications and utilize speech recognition to activate or interact with the applications. Spoken utterances may provide parameters used by an application to perform a specified function. A device may support a variety of voice enabled applications. For example, a portable phone or an in-vehicle hands-free module may support voice enabled phone dialing, email, texting, navigation, searching and booking events such as restaurants, movies, ticketed events or travel accommodations. An automatic speech recognition (ASR) engine may be utilized to analyze audio information generated from a spoken utterance, and to determine which words, phrases and/or sentences were spoken. The ASR may compare spoken words to a stored vocabulary or grammar of words, keywords or phrases. Speech recognition results may be limited by the extent of the ASR vocabulary. In some instances an ASR grammar may be limited to words pertaining to specified actions that a device or a software application may perform. For example, words in a grammar may function as commands for a particular application or may pertain to a particular context such as a particular computing or communication environment or system. A plurality of grammars may correspond to a plurality of applications. A grammar compiler may be utilized when building a grammar based ASR system to compile all the words to be recognized by the ASR from a specified set of grammars. In instances when new words are to be added to the existing ASR, for example, when a new voice enabled application with a corresponding grammar is added to the system, all the existing grammars plus the new grammar may be re-compiled to build the new grammar based ASR system.

A natural language ASRs (NL-ASR) system may comprise extensive grammars or vocabularies that enable interpretation of naturally spoken language, and therefore, may yield a broad transcription capability. More powerful NL-ASRs may handle naturally spoken language in a variety of languages, dialects and accents. NL-ASRs or transcription services may receive spoken words and may recognize speech by extracting one or more words from a broad vocabulary, without prior knowledge of the context in which the spoken words will be utilized. For example, the NL-ASR may not know the application that the spoken words are intended for or may not know what kind of device will utilize the recognized speech. For each spoken word or utterance, a NL-ASR may return a recognition result including a plurality of possible words with corresponding confidence levels for each one. Some NL-ASRs may be operable to determine an intent classification and or one or more intent parameters from the extracted vocabulary words. The intent information may be determined based on general prior knowledge. Exemplary NL-ASR services include NUANCE, LINGO and SIRI.

Natural language understanding is a subtopic of natural language processing that may be utilized for machine reading comprehension. Natural language understanding may include processes for disassembling and parsing input and determining relevant syntactic and semantic schemes.

### BRIEF DESCRIPTION OF THE DRAWINGS

The inventions can be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 is a block diagram of a natural language understanding automatic speech recognition post processing system.

Figure 2 illustrates a plurality of intent classifications and corresponding intent parameters.

Figure 3 is a flow chart including exemplary steps in a natural language understanding automatic speech recognition post processing operation.

Figure 4 is a flow chart including exemplary steps for voice enabling an application utilizing a natural language understanding automatic speech recognition post processing system.

### DETAILED DESCRIPTION OF THE PREFERRED EMBODIMENTS

Voice enabled devices may utilize natural language automatic speech recognition (NL-ASR) services to analyze audio frames and provide a speech recognition result. Audio generated in a device from a spoken utterance may be submitted to the NL-ASR service and the service may return the speech recognition result. A system for post processing NL-ASR results may receive a speech recognition result comprising a generic transcription or general intent classification and parameters from the NL-ASR service and may refine or enhance the result to fit the needs of a specific context, such as a specific device or specific software application. A software application may be voice enabled by simply submitting a set of grammars that are associated with the new application to the post processing system, through an application programming interface (API). Since the NL-ASR system does not need to be re-programmed or re-compiled for each new device or new application that utilizes its speech recognition service it may be relatively easy to write a third party application and voice enable it.

In an automatic speech recognition post processing system, speech recognition results may be received from a natural language automatic speech recognition service. The speech recognition results may include transcribed speech, an intent classification and/or extracted fields of intent parameters. The speech recognition results may be post processed for use in a specified context, for example, for a specific application or a specific device hosting the application. All or a portion of the speech recognition results may be compared to keywords that are sensitive to the specified context. For example, the keywords may be derived from or may be included in grammars, intent templates and/or intent parameters. The keywords may be provided to the post processing system by a specified application or a particular device which may host the application, for example. The post processed speech recognition results may be provided to an appropriate application which may correspond to the application which provided the keywords to the post processing system.

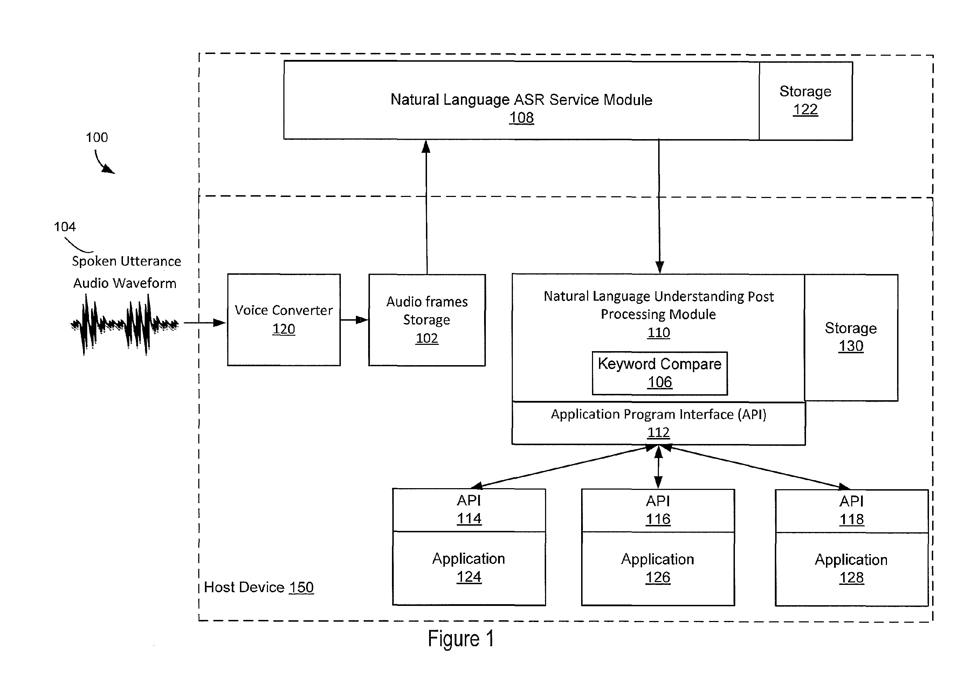

Now turning to the figures, Figure 1 is a block diagram of a natural language understanding automatic speech recognition post processing system. A voice enabled system 100 may comprise a number of elements including a voice converter 120, an audio frames storage 102, a natural language automatic speech recognition (NL-ASR) service module 108 and storage 122. The voice enabled system 100 elements may also include an a natural language understanding (NLU) post processing module 110, a keyword compare module 106, a storage 130, an application programming interface 112, any suitable number of applications, for example, applications 124, 126 and 128, and corresponding application programming interfaces 114, 116 and 118, respectively. Also shown is a hosting device 150.

Although Figure 1 depicts a portion of the voice enabled system 100 residing on the host device 150 and another portion, the NL-ASR service module 108, residing off-board the host device 150, in some systems, all of the elements of the voice enabled system 100 may reside on a single hosting device 150. The hosting device 150 may be any suitable voice enabled device, for example, a wireless phone, a laptop or a hands-free vehicle system. Furthermore, various one or more of the elements of the voice enabled system 100 may reside on remote or distributed devices. In one example, the hosting device 150 may comprise a smart phone or hands-free vehicle system device which may host the voice converter 120, the audio frames storage 102, the NLU post processing module 110 and the applications 124, 127 and 128, while the NL-ASR service 108 may reside on one or more distributed devices. For example, the NL-ASR service 108 may reside on a server which is communicatively coupled via one or more networks to host device 150. In another example, the device 150 may host the voice converter 120, the audio frames storage 102 and the applications 114, 117 and 118, while the NL-ASR service 108 and the NLU post processing module 110 may reside on one or more distributed devices. Moreover, one or more voice enabled system 100 elements may be distributed in a cloud system and/or accessible via any suitable network which may include the Internet. However, the voice enabled system 100 is not limited with regard to how or where the constituent elements are distributed in a network or integrated within a device.

Each of the elements of the voice enabled system 100 may comprise any suitable logic, circuitry, interface and/or code that may be operable to support voice enabled applications such as the applications 124, 126 and 128.

The applications 124, 126 and/or 128 may comprise software, firmware and/or hardware. The applications 124, 126 and/or 128 may be executed by a hardware processor, which may assist in the performance or the execution of a specific task such as controlling a device or a process where the device or process may function locally or remotely relative to the applications. In some systems, the applications 124, 126 and 128 may perform functions in a voice enabled host device 150, for example, phone dialing, email messaging, texting, vehicle systems control, navigation, Internet searching and booking events such as restaurants, movies, ticketed events or travel accommodations. However, the system 100 is not limited with regard to any specific type of application. Some exemplary voice enabled or "hands-free" devices 150 which may host the applications 124, 126 and 128 may include, for example, smartphones and other handheld wireless devices, portable or stationary computer systems, land based or aerospace vehicle systems, medical diagnostic or record systems and any other devices that may interface or include automatic speech recognition. Although three applications, 124, 126 and 128 are shown in Figure 1, the voice enabled system 100 may include any suitable one or more applications and may be flexible to an addition of or removal of applications or to voice enable applications.

The voice converter 120 may receive a spoken utterance 104 and may generate audio frames or segments of audio information including an analog signal or digital data that may represent the spoken utterance 104. The voice converter 120 may be communicatively coupled to the audio frames storage 102. A region in memory or a buffer in the audio frames storage 102 may hold the audio frames received from the voice converter 120, prior to transfer of the audio frames to the NL-ASR service 108. In some systems the NL-ASR service module 108 may reside locally on the same device as the voice converter and/or the audio frames storage 102. In other systems, the NL-ASR service module 108 may reside on a remote device and may be communicatively coupled via a network. The NL-ASR service module 108 may be referred to as the NL-ASR system 108 or may be referred to as an NL-ASR engine or service, for example.

The NL-ASR system 108 may comprise any suitable logic, circuitry, interface or code that may be operable to analyze and process audio information and provide speech recognition results. The NL-ASR system 108 may be communicatively coupled to the NLU post processing module 110 and/or to the voice converter 120. The NL-ASR system 108 may capture speech signal content by processing the audio frames of speech which are input from the voice converter 120 and/or the audio frames storage 102, and may output speech recognition results to the NLU post processing module 110, in real-time and/or after a delay of time. A real-time operation may comprise an operation occurring at rate that may be easily consumed or understood according to human perception, or a process that may occur at the same rate (or perceived to be at the same rate) as a physical process. In one aspect, the NL-ASR system 108 may match sound parts of the audio frames to words or phrases stored in a grammar or vocabulary file. Although the NL-ASR system 108 is shown as a single module in Figure 1, the NL-ASR system 108 may comprise or may interface to any suitable one or more, local and/or distributed NL-ASR service modules, storage devices and databases, for example.

The NL-ASR system 108 may utilize extensive grammars or vocabularies that may enable interpretation of naturally spoken language. In some systems, the NL-ASR service 108 may handle naturally spoken language in a variety of languages, dialects and/or accents. The NL-ASR service 108 may comprise a transcription service which may receive the audio frames generated from the spoken utterance 104, and may recognize speech by extracting one or more words from a broad vocabulary. In some systems, the NL-ASR system 108 may not have prior knowledge of the context in which the spoken utterance 104 will be utilized. For example, in some systems, the NL-ASR service 108 may not know, to which application or to which device the spoken utterance 104 is intended. Furthermore, in some systems, the NL-ASR service 108 may not have knowledge of which grammars or keywords are understood by or used by the applications 124, 126 and/or 128. The NL-ASR service 108 may not have knowledge of which intent templates, intent classifications and intent parameters, or aspects thereof, that may enable the applications 124, 126 and/or 128 to function. Furthermore, the NL-ASR service 108 may not have knowledge of what type of device is hosting and/or is controlled by the applications 124, 126 and 128. The NL-ASR service 108 may not be operable to provide context sensitive intent classifications and/or intent parameters that the hosting device 150 may need to function properly.

For each spoken word or utterance 104, the NL-ASR service 108 may return a recognition result to the NLU post processing module 110. The recognition result may include one or a plurality of conclusions as to which word or utterance was spoken, with corresponding confidence levels, for each suggested word or utterance. In some systems, the NL-ASR service 108 may be operable to determine an intent classification and/or one or more intent parameters based on general or prior intent classification knowledge, utilizing transcribed words which are extracted from a broad vocabulary. For example, a generic email intent or a generic digit dialing intent and corresponding intent parameters may be determined. However, in some instances, the intent information returned to the hosting device may not be correct or the returned intent parameters may be insufficient or lack specific information that one or more of the applications 124, 126 and 128 or the hosting device 150 may need. In another aspect, the NL-ASR service 108 may not know which commands or keywords that enable the applications 124, 126 and/or 128 to function or that enable the device 150 hosting the applications to function.

The NL-ASR service 108 may comprise a local memory, for example, the storage 122, and may store one or more grammar or vocabulary files in the local memory. In addition or alternatively, the NL-ASR service 108 may utilize one or more grammar or vocabulary files stored in a remote or distributed memory, for example, in a cloud system. A cloud system or cloud based computing may refer to a scalable platform that provides a combination of services including computing, durable storage of both structured and unstructured data, network connectivity and other services. Services provided by a cloud system or cloud based computing may be interacted with (provisioned, de-provisioned, or otherwise controlled) via APIs which are accessible by the NL-ASR service 108 and/or the remote or distributed memory.

Furthermore, NL-ASR service 108 may utilize a local or distributed database. The database structure may support a database sublanguage, for example, a structured query language that may be used for querying, updating, and managing data stored in a local or distributed memory of the databases. The database may be accessible through a database engine or APIs that function and/or interact with the database and/or the NL-ASR service 108 module. The database engine or APIs may handle requests for database actions, control database security and/or control data integrity requirements.

Additional details and descriptions regarding automatic speech recognition systems that may be part of the voice enabled system 100 may be found in United States Patent Application Serial No. 13/460,443, which was filed April 30, 2012 and United States Patent Application Serial No. 13/460,462, which was filed April 30, 2012. Each of the above named patent applications is incorporated herein by reference in its entirety.

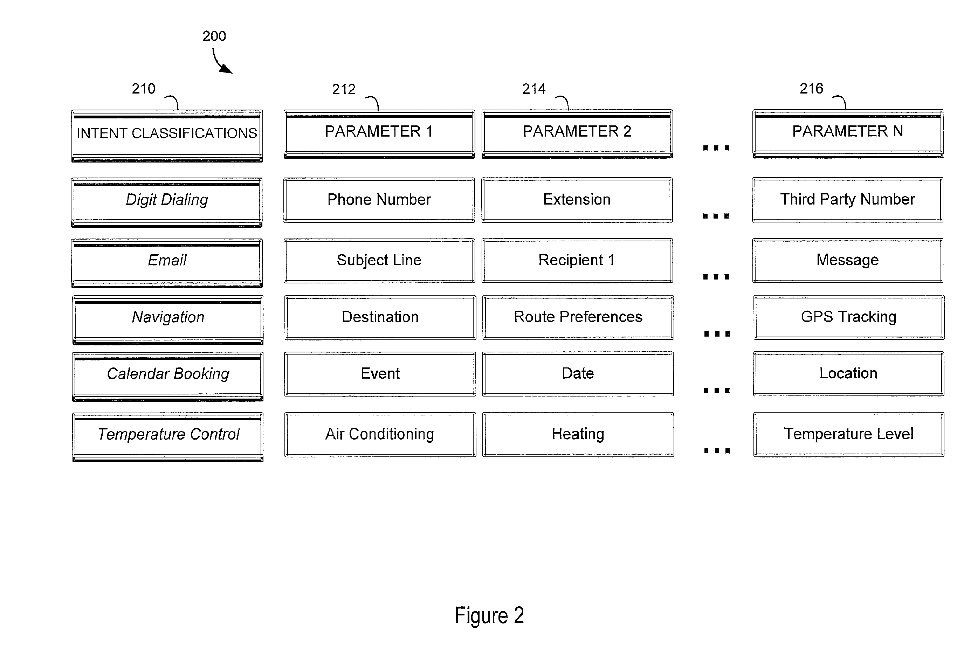

The voice enabled system 100 and/or the applications 124, 126 and 128 may utilize intents for managing a voice enabled function. An intent may describe, may indicate or may be associated with one or more actions or functions that an application may perform or that a spoken utterance may specify. For example, intents may describe functions such as digit dialing, email, texting, vehicle systems control, navigation, Internet searching and calendar booking. Intents may be associated with various parameters that may indicate how to perform a function, or may be used to configure an application to perform an action or function in a specified way. For example, an email intent may be associated with parameters including a subject line, one or more recipients, a message, an attachment and a level of importance. Figure 2 lists a plurality of intent classifications and corresponding intent parameters. The first column 210 of Figure 2 represents the plurality of intent classifications. The subsequent columns 212, 214 and 216 represent parameters associated with each intent. Some intents may not be associated with any parameters. Other intents may be associated with one or more parameters. The intent classification and/or the intent parameters may be indicated in a spoken utterance by the use of certain words or keywords. For example, the word "send" may be a keyword that indicates an email intent or email function. The word "call" and a string of spoken numbers may be keywords used to indicate a digit dialing intent and intent parameters including a phone number to be dialed. In some systems, a variety of different words may operate to indicate one intent classification or one intent parameter. For example, the words "call," "dial," or "contact" may each be successful in indicating the digit dialing intent. A grammar or vocabulary may comprise a number of words and/or keywords that may be used to recognize or detect spoken words. A limited grammar or vocabulary may specify one or more keywords or words that may function as commands for activating and/or controlling an application or may indicate how a device may function. In some instances, a grammar, keywords, intents and/or intent parameters may be tailored for a specific context, for example, for a specific device, a specific interface, a specific network and/or a specific application. A specific application may understand or utilize a specific set of keywords and may communicate the keywords in a grammar or an intent template, for example, to another module, such as the natural language understanding (NLU) post processing module 110. In other instances, generic grammars, keywords, intents and/or intent parameters that may support a number of applications and/or devices in general. For example, the NL-ASR service 108 may not receive a grammar or intent template from the applications 124, 126 and/or 128 and may utilize generic intents and/or intent parameters in instances when it provides speech recognition results to the NLU post processing module 110 or the hosting device 150.

Each of the applications 124, 126 and 128 and/or the device 150 that hosts the applications may utilize one or more intents. In some systems, one or more of the applications 124, 126 and 128 may provide intent templates, grammars and/or keywords to the natural language understanding (NLU) post processing module 110, utilizing an application programming interface (API). For example, an intent template or grammar may be communicated from the application 124 to the NLU post processing module 110 by calling the API 114 and/or API 112. The intent templates, intent parameters, grammars and/or keywords may be stored in the storage 130 which may be accessible by the NLU post processing module 110. An intent template may specify a particular intent classification utilized by the application 124 and may comprise one or more fields that indicate which parameters or keywords the application 124 may utilize to perform functions of the specified intent. The intent template may specify language which is expected or understood by the application 124. Moreover, the intent template may specify an intent name and/or an intent identifier (ID).

NLU post processing module 110 may comprise any suitable logic, circuitry, interface or code that may be operable to receive speech recognition results from the NL-ASR system 108 and may post process the results to provide context sensitive information to one or more of the applications 124, 126 and 128 or to other modules in the device 150 hosting the applications. The applications may provide intent templates, intent parameters, grammars and/or keywords to the NLU post processing module 110 utilizing the APIs 112, 114, 116 and 118. In some systems, the NLU post processing module 110 may receive and use information or keywords related to other functions performed by the device 150 hosting the applications. The intent templates, intent parameters, grammars and/or keywords may be referred to as being context sensitive since they are specified in accordance with the specific applications 124, 126, 128, with the device 150 hosting the applications or other aspects of the voice enabled system 100. The NLU post processing module 110 may utilize the information received from the applications and/or from the device 150 hosting the applications, to post process the speech recognition results received from the NL-ASR system 108 such that the post processing results fit the uses and needs of the applications and/or the device 150 hosting the applications. In this manner, the NLU post processing module 110 may post process the NL-ASR system 108 speech recognition results for use in a specified context.

The information received from the applications and/or the hosting device 150 may be stored in the storage 130, for example, in libraries for use by the NLU post processing module 110. As new applications are added to the voice enabled system 100, corresponding new grammars may be added to the libraries. In this regard, the new grammars may not need to be provided to the NL-ASR system 108 or compiled by a grammar compiler since the NLU post processing module 110 is operable to refine speech recognition results for the new applications based on the corresponding new grammars. For example the NLU post processing module 110 may compare all or a portion of the speech recognition results from the NL-ASR system 108 to one or more of the new grammars or keywords which are particular to the context of the new application and/or the device 150 hosting the new application. In some systems, the NLU post processing module 110 utilizes natural language understanding techniques to post process the speech recognition results from the NL-ASR system 108.

When post processing and/or analyzing speech recognition results from the NL-ASR module 108, the NLU post processing module 110 may detect intent parameter values, for example, words or keywords that correspond to specified intent template fields from one or more of the applications 124, 126 and 128. The NLU post processing module 110 may determine an appropriate application or other destinations or modules in the hosting device 150 that the post processed speech recognition results should be provided to. The detected parameter values may be normalized to comply with the language understood by the determined application, and may be provided to the appropriate application or appropriate modules in the device 150. The parameter values may be provided in prescribed or organized fields in accordance with specifications associated with the appropriate application. The applications 124, 126 and 128 may receive the intent parameters as text, numerical data or other forms of information. The intent parameters may be utilized as commands or as configuration information by one or more of the applications 124, 126 and 128 and/or the hosting device 150. For example, the intent parameters may provide information on how to perform an action.

A variety of words, keywords and/or phrases may correspond to one intent template or to one intent parameter. For example, in some systems, a vocabulary or grammar used by the NLU post processing module 110 may associate the words "email," "message" and "note" with an email intent. Moreover, information stored in files on the hosting device 150 may be accessed and/or may be added to NLU post processing module 110 grammars or vocabularies. For example, the device 150 may store or have access to a contact list with names, phone numbers and/or email addresses. This information may be communicated to the NLU post processing module 110 and stored in the storage 130 or in another data store to be used in post processing the speech recognition result from the NL-ASR system 108.

The keyword compare module 106 in the NLU post processing module 110 may receive speech recognition results from the NL-ASR system 108 comprising recognized words, phrases, generic intents or intent parameters and may compare them to the context sensitive intents, intent parameters, grammars or keywords stored in the storage 122. In instances when the keyword compare module 106 finds a sufficient match, the NLU post processing module 110 may communicate a corresponding intent classification and/or intent parameters to one or more of the applications 124, 126 and 128 that may support the intent and/or the intent parameters.

In one illustrative example of a voice enabled system 100 operation, the hosting device 150 may comprise a smart phone and may be referred to as the smart phone 150. The smart phone 150 may host a portion of the voice enabled system 100 including all the elements except the NL-ASR system 108 and the storage 122. For example, the smart phone may host the NLU post processing module 110, the storage 130, the applications 124, 126 and 128 and the APIs 112, 114, 116 and 118, the voice converter 120 and the audio frames storage 102. The storage 130 may comprise context sensitive intent classifications, intent parameters, grammars and keywords relating to the applications 124, 126 and 128 and the smart phone 150. Each of the applications 124, 126 and 128 may be voice enabled applications that may be activated or controlled by output from the NLU-post processing module 110. The NL-ASR system 108 may be an off-board system residing on a network server which is accessible by the smart phone 150 via a network, for example, via a wireless network and the Internet. The NL-ASR system 108 may comprise or have access to a database comprising an extensive vocabulary and may be operable to provide a natural language transcription language service and/or may provide generic intent classifications and/or intent parameters.

A spoken utterance 104 may be received by the voice converter 120 which may comprise "call seven seven three national two six thousand extension four two one one" which may be converted into a plurality of audio frames, stored in the audio frames storage 102 and communicated to the NL-ASR system 108. The NL-ASR system 108 may provide a speech recognition result including one or more suggested words for each spoken word and a corresponding confidence level for each suggested word. The NL-ASR system 108 may also infer an intent classification of digit dialing and one or more digit dialing parameters including the phone number 773-622-6000, however, the generic digit dialing intent may not include a field for an extension number. The NL-ASR system 108 may return the suggested words with corresponding confidence levels, the digit dialing intent classification and the intent parameters including the phone number to the smart phone 150. The keyword compare module 106 in the NLU post processing module 110 may compare the suggested words to keywords or grammars stored in the storage 130 which were received from the applications 124, 126 and 128. The NLU post processing module 110 may determine that the application 124 comprises a digit dialing intent template that includes fields for a phone number parameter and an extension number parameter and may extract the extension number 4211 from the predicted words. The NLU post processing module 110 may communicate the digit dialing intent classification, the phone number parameter and the extension number to the application 124 in a format and/or fields which are specified for the application 124. The application 124 may automatically dial the phone number 773-622-2000 and may wait until the dialed phone is off-hook. When the dialed phone is off-hook the application 124 may automatically enter the extension number 4211.

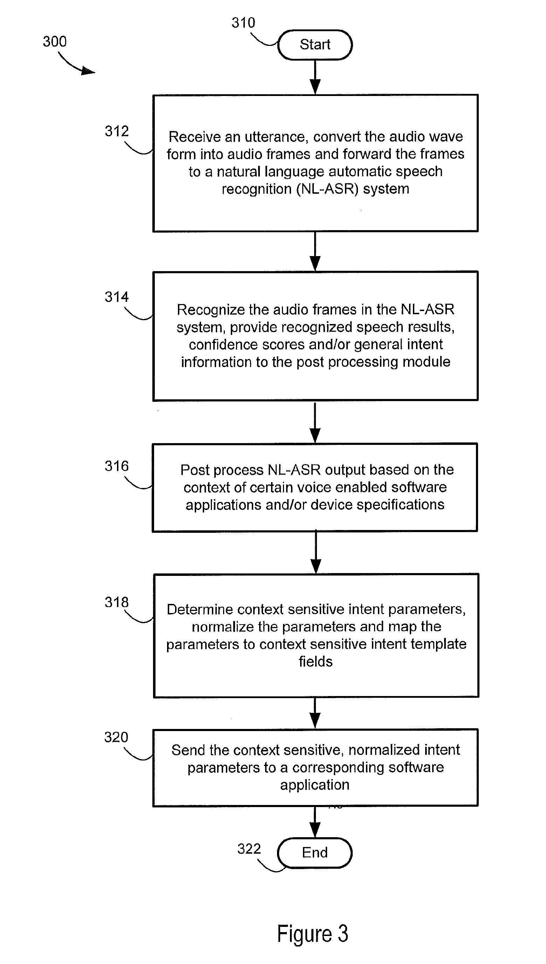

Figure 3 is a flow chart including exemplary steps in a natural language understanding automatic speech recognition post processing operation. Referring to Figure 3, the exemplary steps may begin at start step 310. In step 312, the voice converter 120 may receive an audio signal generated by the spoken utterance 104, may convert the audio waveform into audio frames and may forward the audio frames to the NL-ASR system 108. In step 314, the NL-ASR system 108 may recognize the audio frames and may provide recognized speech results, corresponding confidence scores and/or general intent classification and parameter information to the NLU post processing module 110. In step 316, the NLU post processing module 110 may post process the NL-ASR system 108 output in the context of the applications 124, 126 and 128 and the smart phone 150, for example, based on a comparison of the recognized speech results with keywords or grammars provided by the applications 124, 126 and 128 and/or specifications of the smart phone 150. In step 318, the NLU post processing module 110 may determine context sensitive intent parameters for one or more of the applications 124, 126 and 128, may normalize the intent parameters and may map the parameters to context sensitive intent template fields. In step 320, the NLU post processing module 110 may transmit the intent classification and the context sensitive, normalized intent parameters to the one or more appropriate applications. The exemplary steps may end at step 322.

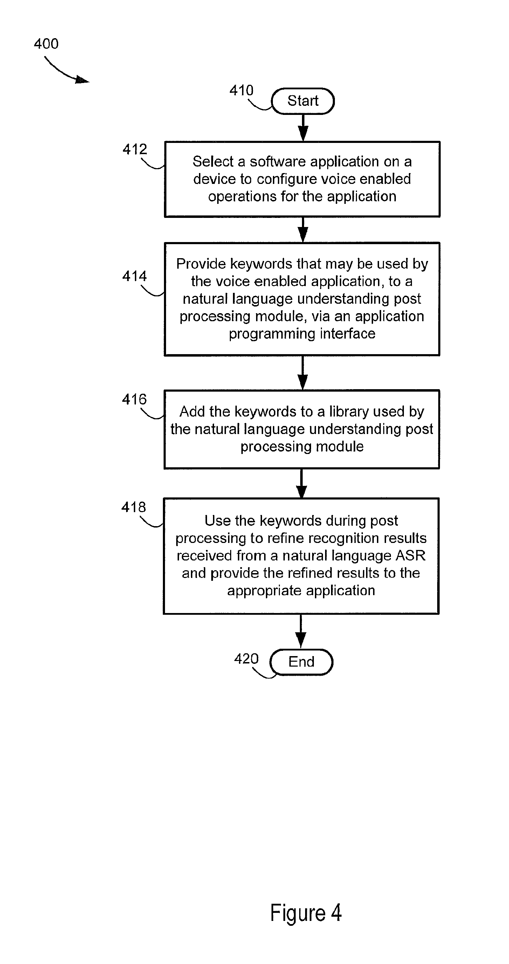

Figure 4 is a flow chart including exemplary steps for voice enabling an application utilizing a natural language understanding automatic speech recognition post processing system 110. Referring to Figure 4, the exemplary steps may begin at start step 410. In step 412, the software application 124 may be selected to be voice enabled. In step 414, the application 124 may utilize the API 114 and/or the API 112 to provide, to the NLU post processing module 110, an intent template including one or more intent classifications and/or one or more intent parameters and a grammar which may include a plurality of expected keywords. The expected keywords may be utilized for controlling the application 124. In step 416, the intent information, grammar and keywords may be added to a library used by the NLU post processing module 110 and the keyword compare module 106. In step 418, The NLU post processing module 110 may use the keywords to refine recognition results received from the NL-ASR system 108. The exemplary steps may end at step 420.

While each of the systems, engines, methods, and descriptions described herein may stand alone they also may be encompassed within other systems and applications. Other alternate systems may include any combinations of structure and functions described above or shown in one or more or each of the figures. These systems or methods are formed from any combination of structure and function described. The structures and functions may process additional or different input. For example, each of the systems and processes described may include other instances of ASR's (e.g., natural language-based ASRs and other grammar-based ASRs), processors and converters at other processes and other stages that may be structured in a hierarchal order. Moreover, some processes may occur in a sequential order in real-time.

The elements, systems, engines, methods, modules, applications and descriptions described herein may also be programmed in one or more controllers, devices, signal processors, general processors, specialized processors and one or more processors and a coprocessor (e.g., a coprocessor is a processor distinct from a main processor, that performs additional functions to assist the main processor). The processors may be arranged in a parallel processing structure and/or multiprocessing structure. Parallel processing may run on a computer containing two or more processors running simultaneously. Parallel processing differs from multiprocessing in the way a task may be distributed. In multiprocessing systems, one processor may manage the conversion of spoken frames into analog data, another may manage an ASR engine, and a third may manage the post processing engine. Alternatively, each of the voice enabled system 100 modules or elements described herein may run on virtual machines in which one, two, etc. or all of the elements are isolated on a complete system platform that supports the execution of a complete operating system (OS). The virtual machines may be limited to the resources and abstractions provided by the particular virtual machine. Some virtual machines may not break out of their isolated virtual worlds to access more resources. In yet another alternative, each of the voice enabled system 100 modules or elements described herein may be executed by a multitasking processor executing multiple computer threads (e.g., multithreading). In yet another alternative, an ASR and the NLU speech recognition result post processing system may be executed by a single engine.

The engines may comprise a processor or a portion of a program that executes or supports an ASR system and/or the NLU speech recognition post processing system or process. The processor may comprise one, two, or more central processing units, some of which may execute instruction code, mine speech data, or access data from memory that may generate, support, and/or complete an operation, compression, or signal modifications. The NLU post processing module may support and define the functions of a processor that is customized by instruction code (and in some applications may be resident to any voice enabled systems that may include vehicles, communication systems, medical systems, audio systems, telephones, teleconferencing systems, etc.). In some systems, a front-end processor may perform the complementary tasks of capturing audio or speech for a processor or program to work with, and for making the audio frames and results available to back-end ASR processors, controllers, engines, or devices.

In some systems, the elements, systems, methods, modules, engines, applications and descriptions described herein may be encoded in a non-transitory signal bearing storage medium, a computer-readable medium, or may comprise logic stored in a memory that may be accessible through an interface and is executable by one or more processors. Some signal-bearing storage medium or computer-readable medium comprise a memory that is unitary or separate (e.g., local or remote) from the voice enabled devices such as such as cell phones, wireless phones, personal digital assistants, two-way pagers, smartphones, portable computers, vehicle based devices, medical diagnostic systems, medical record systems, and any other devices that interface or include voice enabling technology. If the descriptions or methods are performed by software, the software or logic may reside in a memory resident to or interfaced to the one or more processors, devices, or controllers that may support a tangible or visual communication interface (e.g., to a display), wireless communication interface, or a wireless system.

The memory or storage disclosed within may retain an ordered listing of executable instructions for implementing logical functions. A logical function may be implemented through digital circuitry, through source code, or through analog circuitry. The memory or storage described herein may comprise a "computer-readable storage medium," "machine-readable medium," "propagated-signal" medium, and/or "signal-bearing medium" which may comprise a non-transitory medium that stores, communicates, propagates, or transports software or data for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical connection having one or more wires, a portable magnetic or optical disk, a volatile memory, such as a Random Access Memory (RAM), a Read-Only Memory (ROM), an Erasable Programmable Read-Only Memory (EPROM or Flash memory), or an optical fiber. A machine-readable medium may also include a tangible medium, as the software may be electronically stored as an image or in another format (e.g., through an optical scan), then compiled, and/or interpreted or otherwise processed. The processed medium may then be stored in a memory or database accessible by a database engine that provides access to a database management system. When such devices are responsive to such commands events, and/or requests, the actions and/or steps of the devices, such as the operations that devices are performing, necessarily occur as a direct or indirect result of the preceding commands, events, actions, and/or requests.

Other systems, methods, features and advantages will be, or will become, apparent to one with skill in the art upon examination of the figures and detailed description. It is intended that all such additional systems, methods, features and advantages be included within this description, be within the scope of the invention, and be protected by the following claims.

Aspects and features of the present disclosure are set out in the following numbered items:
16. The system wherein said one or more context sensitive keywords are associated with said computing or communication device.
17. The system wherein said one or more context sensitive keywords are associated with an application that is executable by said computing or communication device.
18. The system wherein said one or more extracted fields of intent parameters are normalized into a form that it is usable by an application.
19. The system wherein said one or more processors or circuits are operable to determine a context sensitive intent classification during said post processing, based on said speech recognition results and said one or more context sensitive keywords.
20. The system wherein said one or more processors or circuits are operable to determine one or more context sensitive intent parameters during said post processing, based on said speech recognition results and said one or more context sensitive keywords.
21. The system wherein said speech recognition results received from said automatic speech recognition service is post processed using natural language understanding techniques.
22. The system wherein said automatic speech recognition service is a natural language automatic speech recognition service which is not sensitive to said specified context.

## Claims

1. A method for automatic speech recognition result post processing, the method comprising:
in a computing or communication device (150):
receiving speech recognition results from an automatic speech recognition service (314), said speech recognition results including one or more of:
transcribed speech,
an intent classification, and
one or more extracted fields of intent parameters; (314)
post processing said speech recognition results for use in a specified context, by comparing all or a portion of said speech recognition results to one or more context sensitive keywords; and (316, 318)
providing said post processed said speech recognition results to an application (320).

2. The method of claim 1, wherein said one or more context sensitive keywords are associated with said computing or communication device (150, 316, 318, 414).

3. The method of claims 1 or 2, wherein said one or more context sensitive keywords are associated with an application that is executable by said computing or communication device. (316, 318, 414)

4. The method of claims 1 or 3, wherein said one or more extracted fields of intent parameters are normalized into a form that it is usable by an application. (318)

5. The method of claims 1 or 4 further comprising, determining a context sensitive intent classification during said post processing, based on said speech recognition results and said one or more context sensitive keywords. (316, 318)

6. The method of claims 1 or 5 further comprising, determining one or more context sensitive intent parameters during said post processing, based on said speech recognition results and said one or more context sensitive keywords. (316, 318)

7. The method of claims 1 or 6 further comprising, extracting one or more context sensitive intent parameters, during said post processing, from said one or more of:
said transcribed speech,
said intent classification, and
said one or more extracted fields of intent parameters. (316, 318)

8. The method of claims 1 or 7 further comprising, adding intent parameters to said one or more extracted fields of intent parameters received from automatic speech recognition service or removing intent parameters from said one or more extracted fields of intent parameters received from automatic speech recognition service during said post processing. (316, 318)

9. The method of claims 1 or 8, wherein said speech recognition results received from said automatic speech recognition service is post processed using natural language understanding techniques. (314)

10. The method of claims 1 or 9, wherein said automatic speech recognition service is a natural language automatic speech recognition service which is not sensitive to said specified context. (314)

11. The method of claims 1 or 10 further comprising, adding a new application to said computing or communication device and dynamically voice enabling said new application by: (400)
receiving one or more context sensitive keywords that are associated with said new application utilizing an application programming interface; (414, 416)
post processing said speech recognition results based on the context of said new application, by comparing all or a portion of said speech recognition results to said one or more of said context sensitive keywords that are associated with said new application; (418) and
providing said post processed said speech recognition results to said new application. (418)

12. A system for automatic speech recognition result post processing, the system comprising one or more processors or circuits (150) for use in a computing or communications device (150), wherein said one or more processors or circuits (150) are operable to:
receive (110) speech recognition results from an automatic speech recognition service (108), said speech recognition results including one or more of:
transcribed speech,
an intent classification, and
one or more extracted fields of intent parameters;
post process (110) said speech recognition results for use in a specified context, by comparing (106) all or a portion of said speech recognition results to one or more context sensitive keywords (130); and
provide (106) said post processed said speech recognition results to an application (124, 126, 128).

13. The system of claim 12, wherein said one or more processors or circuits are operable to extract (110) one or more context sensitive intent parameters, during said post processing, (110, 106) from said one or more of:
said transcribed speech,
said intent classification, and
said one or more extracted fields of intent parameters.

14. The system of claims 12 or 13, wherein said one or more processors or circuits are operable to add (110) intent parameters to said one or more extracted fields of intent parameters received from automatic speech recognition service (108) or remove (110) intent parameters from said one or more extracted fields of intent parameters received from automatic speech recognition service (108) during said post processing (110, 106).

15. The system of claims 12 or 14, wherein said one or more processors or circuits are operable to add a new application (412) to said computing or communication device (150) and dynamically voice enable said new application (412) by:
receiving (110, 130, 416) one or more context sensitive keywords that are associated with said new application (412) utilizing an application programming interface (112);
post processing (110, 106) said speech recognition results (108) based on the context of said new application, (412, 414, 416, 418) by comparing (106) all or a portion of said speech recognition results (108) to said one or more of said context sensitive keywords that are associated with said new application; (412, 414, 416, 418) and
providing (110) said post processed said speech recognition results to said new application (418).
